(19) Europäisches Patentamt
European Patent Office
Office européen des brevets

(11) **EP 4 563 946 A1**

(12) **EUROPEAN PATENT APPLICATION**

(43) Date of publication:
**04.06.2025 Bulletin 2025/23**

(21) Application number: **23213803.2**

(22) Date of filing: **01.12.2023**

(51) International Patent Classification (IPC):
***G01D 4/00*** (2006.01)     ***G01F 15/06*** (2022.01)

(52) Cooperative Patent Classification (CPC):
**G01D 4/008; G01F 15/066; G01F 15/0755;**
G01D 2204/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Sureflow Ltd**
**London WC2H 9JQ (GB)**

(72) Inventor: **Dui, Sebastien**
**6040 Jumet (BE)**

(74) Representative: **Icosa Europe**
**Rue d'Oultremont 37**
**1040 Bruxelles (BE)**

(54) **APPARATUS TO MEASURE THE CONSUMPTION OF WATER, GAS OR ELECTRICITY**

(57)     An apparatus (10) to measure the consumption of water, gas or electricity as registered respectively by an existing water, gas or electricity meter (1). The apparatus (10) comprises a first magnetic sensor (21) having a first sensing axis (X1) and a second magnetic sensor (22) having a second sensing axis (X2), wherein the first sensing axis (X1) forms an angle comprised between 1° and 179° with the second sensing axis (X2). The apparatus (10) comprises a data acquisition unit (30) operationally connected to the first and second magnetic sensors and configured to acquire data from the first and second magnetic sensors, and a power supply (40) for powering the apparatus (10).

Fig. 2

## Description

### Field of the invention

The invention relates to an apparatus to measure the consumption of water, gas or electricity, more particularly to measure the consumption of water, gas or electricity as being registered by an existing water, gas or electricity meter.

### Description of prior art

An apparatus to measure the consumption of water as being registered by an existing water meter is known from patent application WO2020141228A1. It comprises a magnetic sensor which is placed at close proximity of the water meter or against the water meter. The magnetic sensor is adapted to sense movements which occur inside the water meter and which are indicative of water consumption. The data delivered by the sensor are therefore indicative of water consumption. The apparatus also comprises a processing unit to process the data delivered by the sensor.

Such apparatus is also known from patent application US2010289652A1, which has a similar configuration.

Though these known apparatus works well in general, they don't always work well with existing water meters. They may for example deliver erroneous or inaccurate data if they are not correctly placed with respect to the existing water meter. They may also not work or not work well with some types of existing water meters.

### Summary of the invention

It is an object of the present disclosure to provide an apparatus to measure the consumption of water, gas or electricity as being registered by an existing water, gas or electricity meter, which addresses the problems of the state of the art apparatus.

The invention is defined by the independent claims. The dependent claims define advantageous embodiments.

In some examples, there is provided an apparatus to measure the consumption of water, gas or electricity as registered by an existing water, gas or electricity meter, the apparatus comprising:

- a sensor unit including a first magnetic sensor having a first sensing axis;
- a data acquisition unit operationally connected to the sensor unit; and
- a power supply,

wherein the apparatus comprises a second magnetic sensor having a second sensing axis, wherein the first sensing axis forms a first angle ($\alpha$) comprised between 1° and 179° with the second sensing axis, and wherein the data acquisition unit is configured to acquire data from the first magnetic sensor and from the second magnetic sensor.

By the sensing axis of a magnetic sensor, one has to understand the main direction according to which the sensor detects magnetic fields. In the case of a Hall effect sensor for example, and as is well known in the art, the axis of the sensor is a line perpendicular to the surface of the (usually plane) semiconductor element of the sensor.

By using two magnetic sensors whose sensing axis converge towards the water, gas or electricity meter to be observed (when the sensor unit is placed in the proximity of the meter or against the meter), it becomes indeed possible to cross-reference their respective outputs and hence to improve the accuracy of the evaluation of the water, gas or electricity consumption. It becomes also possible to eliminate or at least to reduce the influence of parasitic magnetic fields. It becomes also possible to continue measuring the consumption even if one of the two magnetic sensors fails (operation in degraded mode).

In some examples, the first angle is an angle comprised between 30° and 60°.

In some examples, the first angle is an angle comprised between 40° and 50°.

In some examples, the first angle is an angle of 42°.

The inventors have indeed found that these angles represent an orientation of the two magnetic sensors which is the most compatible with a variety of existing water, gas or electricity meters, i.e an orientation which delivers satisfying measurement data with such variety of existing meters.

In some examples, the first sensing axis and the second sensing axis are in a same plane. This facilitates the manufacturing of the sensor unit, particularly when using magnetic sensors in the form of surface mounted integrated circuits.

In some examples, the first magnetic sensor and the second magnetic sensor are Hall-effect sensors.

### Short description of the drawings

These and further aspects of the invention will be explained in greater detail by way of examples and with reference to the accompanying drawings in which:

Fig.1    schematically shows an example of an apparatus according to the invention when arranged close to an existing water, gas or electricity meter;

Fig.2    schematically shows an exemplary sensor unit of the apparatus of Fig.1 when arranged close to an existing water, gas or electricity meter;

Fig.3    schematically shows another exemplary sensor unit of the apparatus of Fig.1;

Fig.4    schematically shows a top view of the sensor unit of Fig.3 when arranged close to an existing water, gas or electricity meter;

Fig.5    schematically shows another example of an apparatus according to the invention;

Fig.6    schematically shows another example of an apparatus according to the invention;

Fig.7    schematically shows an example of a system comprising two apparatus according to the invention;

Fig.8    schematically shows another example of a system comprising two apparatus according to the invention.

The drawings of the figures are neither drawn to scale nor proportioned. Generally, similar or identical components are denoted by the same reference numerals in the figures.

**Detailed description of embodiments of the invention**

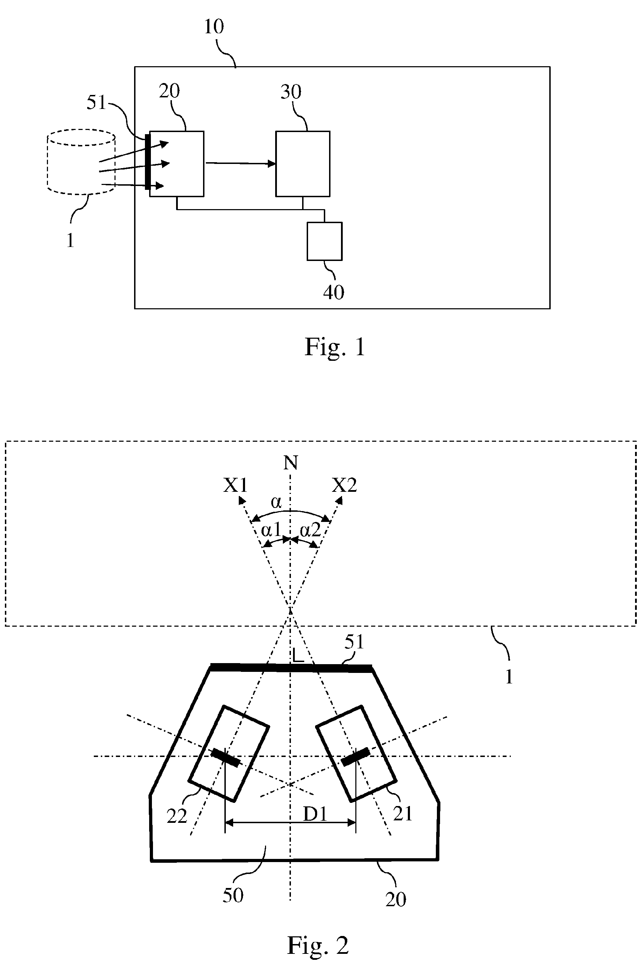

Fig.1 schematically shows an example of an apparatus (10) according to the invention, when arranged close to or against an existing water, gas or electricity meter (1). The meter (1) is not part of the invention and is only shown here for illustration purposes and to show how the apparatus (10), when in use, may for example be arranged with respect to the meter (1).

The apparatus (10) comprises a sensor unit (20) including a first magnetic sensor (21) and a second magnetic sensor (22), as well as a data acquisition unit (30) operationally connected to the sensor unit (20) and a power supply (40) to supply power to the apparatus (10). The power supply (40) may be a battery or a fuel cell for example.

Fig.2 schematically shows a top view of an exemplary sensor unit (20) of the apparatus (10) of Fig.1 when arranged close to an existing water, gas or electricity meter (1). As can be seen on this figure, the first magnetic sensor (21) has a first sensing axis (X1) and the second magnetic sensor (22) has a second sensing axis (X2).

By the sensing axis of a magnetic sensor, one has to understand the main direction according to which the sensor detects magnetic fields. In the case of a Hall effect sensor for example, and as is well known in the art, the axis of the sensor is a line perpendicular to the surface of the (usually plane) semiconductor element of the sensor. On the top view of Fig. 2, this plane is indicated by a fat line segment inside each magnetic sensor.

As is well known too, existing water or gas meters (1) have internal parts which are moving in function of respectively water or gas consumption. Some of these internal parts are magnetic and hence emit a varying magnetic field when they are moving. By placing the sensor at proximity of the existing water or gas meter (1) or against the existing meter (1), as shown on Fig.2 for example, the first and second magnetic sensor (22)s will each be able to detect the said varying magnetic field emitted by the meter (1) and will hence each deliver data which are indicative of water or gas consumption.

In case electricity consumption is to be measured, the sensor unit (20) may be placed at proximity of, or against an existing residual current circuit breaker (RCCB) or an existing ground fault circuit interrupter (GFCI) for example. When electricity is consumed, the electric current passing through these devices will emit an electro-magnetic field which is proportional to the intensity of the electric current and whose magnetic component can hence be measured by the sensor unit (20).

The first and second magnetic sensor (22)s are arranged such that first sensing axis (X1) forms a first angle ($\alpha$) comprised between 1° and 179° with the second sensing axis (X2).

In some examples, the first angle ($\alpha$) is an angle comprised between 30° and 60°. In some examples, the first angle ($\alpha$) is an angle comprised between 40° and 50°. In some examples, the first angle ($\alpha$) is an angle of 42°.

In some examples, the first and second magnetic sensors (21, 22) are arranged such that the first sensing axis (X1) and the second sensing axis (X2) are in a same plane.

In some examples, the sensor unit (20) comprises a structure (50) onto which the first magnetic sensor (21) and the second magnetic sensor (22) are mounted and the structure (50) presents a front surface (51), preferably a plane front surface (51). As shown on Fig.2, the front surface (51) is the surface which is to be arranged close to or against the existing meter (1) to be monitored. Such structure (50) may for example be a box or a housing into which a support is mounted and presenting the said front surface (51). In case the first magnetic sensor (21) and the second magnetic sensor (22) are integrated circuits, the support may be a printed circuit board for example.

In some examples, and as shown on Fig.2, the first magnetic sensor (21) and the second magnetic sensor (22) are mounted on the structure (50) such that the first sensing axis (X1) and the second sensing axis (X2) are both in a plane which is perpendicular to the front surface (51).

In some examples, and as shown on Fig.2, the first sensing axis (X1) and a normal (N) to the front surface (51) of the structure (50) form one half ($\alpha$1) of the first angle ($\alpha$), and the second sensing axis (X2) and the normal (N) to the front surface (51) of the structure (50) form the other half ($\alpha$2) of the first angle ($\alpha$).

In some examples, the first magnetic sensor (21) and the second magnetic sensor (22) are spaced apart by a first distance (D1) comprised between 1 mm and 10 mm. In case the first angle ($\alpha$) is of 42°, the first distance (D1) is for example comprised between 2 mm and 6 mm, preferably between 3 mm and 5 mm, preferably 4 mm.

In some examples, the first magnetic sensor (21) and the second magnetic sensor (22) are Hall sensors.

The data acquisition unit (30) is configured to acquire measurement data from the first magnetic sensor (21) and from the second magnetic sensor (22). In case the magnetic sensors deliver an analog signal, the data acquisition unit (30) may for example comprise and analog to digital converter, so as to deliver digital measurement data. In some examples, the magnetic sensors may directly deliver digital measurement data. When the sensor unit (20) is arranged at proximity of an existing water or gas meter (1), or of an RCCB (1) or GFCI (1), and when water, gas or electricity is consumed, these measurement data will hence be indicative of water, gas or electricity consumption, respectively.

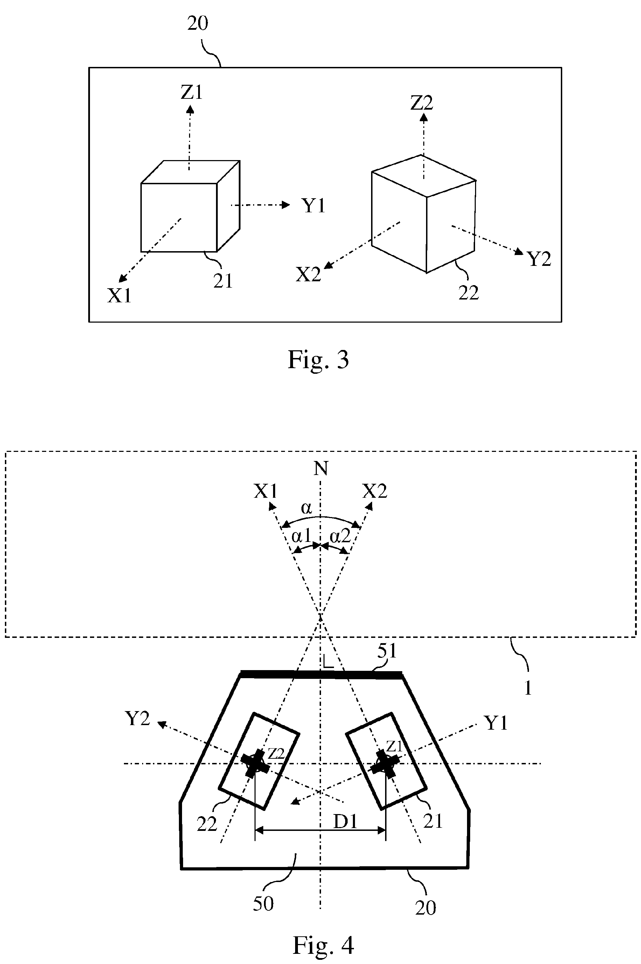

Fig.3 schematically shows another exemplary sensor unit (20) of the apparatus (10) of Fig.1. In this example, the first magnetic sensor (21) is a 3D magnetic sensor and the second magnetic sensor (22) is a 3D magnetic sensor. As shown on Fig.3, the first magnetic sensor (21) comprises in fact three magnetic sensors arranged so that their three sensing axis (X1, Y1, Z1) are perpendicular to each other, and the second magnetic sensor (22) comprises in fact three other magnetic sensors arranged so that their three sensing axis (X2, Y2, Z2) are perpendicular to each other. Such magnetic sensors are known in the art and are sometimes called 3D sensors. In this example, the data acquisition unit (30) is of course configured to acquire data from the three sensors of the first magnetic sensor (21) and from the three other sensors of the second magnetic sensor (22).

Fig.4 schematically shows a top view of the sensor unit (20) of Fig.3 when arranged close to an existing water, gas or electricity meter (1). It is the same as the sensor unit (20) described in relation to Fig. 2, except that the first magnetic sensor (21) is here a 3D magnetic sensor and that the second magnetic sensor (22) is a 3D magnetic sensor. In this example, the first sensing axis (X1) and the second sensing axis (X2) are arranged as described in relating to Fig.2. The other four sensing axis (Y1, Y2, Z2, Z2) of the other four sensors may be arranged various ways and not necessarily as shown on the example of Fig.4. In the example of Fig.4, the two Z-axis (Z1, Z2) are parallel to each other and the two Y-axis (Y1, Y2) are in the same plane, but one may for example tilt the sensors so that the Z-axis (Z1, Z2) are not parallel to each other and/or such that the Y-axis (Y1, Y2) are not in the same plane.

In some examples, the first magnetic sensor (21) and the second magnetic sensor (22) are 3D Hall sensors.

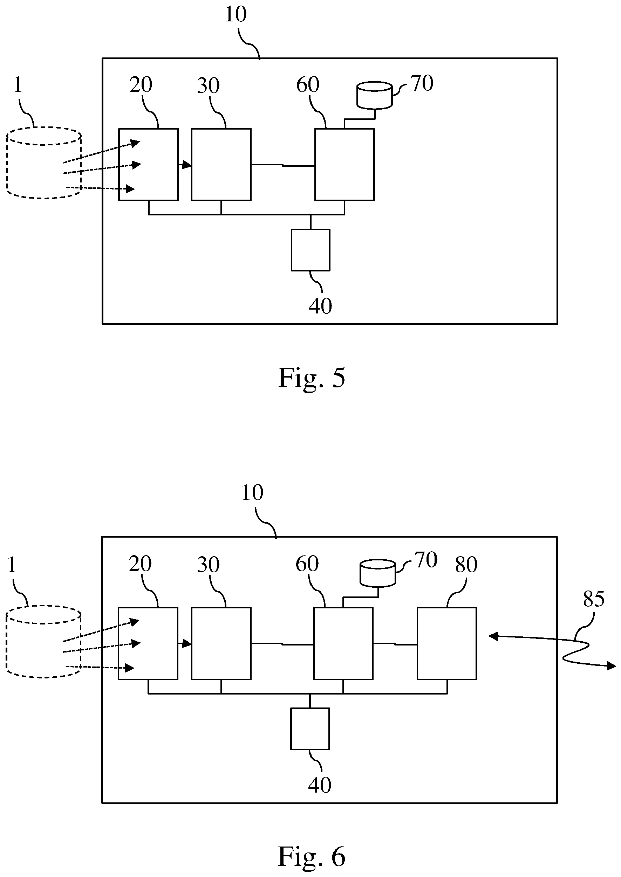

Fig.5 schematically shows another example of an apparatus (10) according to the invention. It is the same as the apparatus (10) described in relation to Fig. 2 to Fig.4, except that the apparatus (10) further comprises a data processing unit (60) operationally connected to the data acquisition unit (30) and configured to process the measurement data provided by the first and second magnetic sensors (21, 22). The data processing unit (60) may be any kind of device or component which is adapted to process digital data, such as for example a microcomputer or a microcontroller. In some examples, the data acquisition unit (30) and the data processing unit (60) form a single unit which may for example be a microcontroller.

The data processing unit (60) may include a software program which, when executed, causes the data processing unit (60) (generally a CPU of the data processing unit) to process the measurement data provided by the first and second magnetic sensors (21, 22).

The data processing unit (60) may for example calculate water, gas or electricity consumption in function of the measurement data provided by the first magnetic sensor (21) and/or by the second magnetic sensor (22), as acquired over time. Since existing water and gas meters (1) generally generate magnetic field pulses over time, each pulse representing a given amount of water or gas consumption, the measurement data provided by one magnetic sensor along one of its axis at a given instant of time is indicative of a given amount of water or gas consumption at or around this instant of time.

In case the sensor unit (20) comprises two single-axis magnetics sensors, the data processing unit (60) may for example calculate averages of the measurement data provided at each given instant of time by the first magnetic sensor (21) according to its first sensing axis (X1) and by the second magnetic sensor (22) according to its second sensing axis (X2), so as to improve the accuracy of the resulting consumption.

The data processing unit (60) may for example perform the following calculation in case the sensor unit (20) comprises two single-axis magnetic sensors (21, 22), as shown in Fig.2 for example:

$$AverageX\ (t) = (dataX1(t) + dataX2(t))/2,$$

wherein :

- AverageX(t) = the calculated average value at instant t;

- dataX1(t) = the measurement data of the first magnetic sensor (21) according to its first sensing axis (X1) at instant t;
- dataX2(t) = the measurement data of the first magnetic sensor (21) according to its second sensing axis (X2) at instant t.

The data processing unit (60) may for example also eliminate those AverageX(ti) values of those instants ti , or generate or emit an alarm signal, when dataX1(ti) differs too much from dataX2(ti), for example when the absolute value of (dataX1(ti) - dataX2(ti)) is larger than a preset threshold value, which may be indicative of an incorrect positioning of the sensor unit (20) with respect to the meter (1) to be observed.

When the sensor unit (20) comprises two 3D magnetic sensors, as shown in Fig.4 for example, the same calculation may be performed for the four other axis Y1, Y2, Z1 and Z2 of the first and second magnetic sensors (21, 22), thereby resulting in three values AverageX (t), AverageY(t) and AverageZ(t), calculated the same way as for the two X axis. The data processing unit (60) may for example also calculate and average of these three values at each instant t, as follows:

$$Average(t) = (AverageX(t) + AverageY(t) + AverageZ(t))/3$$

In case electricity consumption is to be measured by placing the sensor unit (20) close to an existing RCCB (1) or to an existing GFCI (1), the measurement data provided by one magnetic sensor along one of its axis at a given instant of time is indicative of instant electric current at this instant of time, and the same calculations as described hereinabove for the water or gas meters (1) may be performed by the data processing unit (60) for the first and second magnetic sensors of the sensor unit (20). Furthermore, and as is well known, electric energy consumption may then be calculated by integrating the instant electric current over a period of time and by multiplying the result with the voltage (assuming the latter is constant).

In some examples, the data processing unit (60) includes a first pre-trained Artificial Intelligence (AI) model and it uses this AI model to detect specific patterns of water, gas or electricity consumption based on the measurement data provided the first and/or second magnetic sensor, and to categorize the results.

The measurement data of the first and second magnetic sensors as well as the results calculated from these data may be stored by the data processing unit (60) into a memory (70) of the apparatus (10), preferably a non-volatile memory (70), for later use and/or transmission to other devices.

Fig.6 schematically shows another example of an apparatus (10) according to the invention. It is the same as the apparatus (10) described in relation to Fig. 5, except that the apparatus (10) further comprises a data communication unit (80) operationally connected to the data processing unit (60) and configured to transmit the data processed by the data processing unit (60) to another more or less distant device. Data communication units are well known and may be wired or wireless data communication units. In some examples, the data communication unit (80) is a wireless data communication unit using for example Bluetooth, WIFI, mobile (cellular) communication, or LoRaWAN protocols.

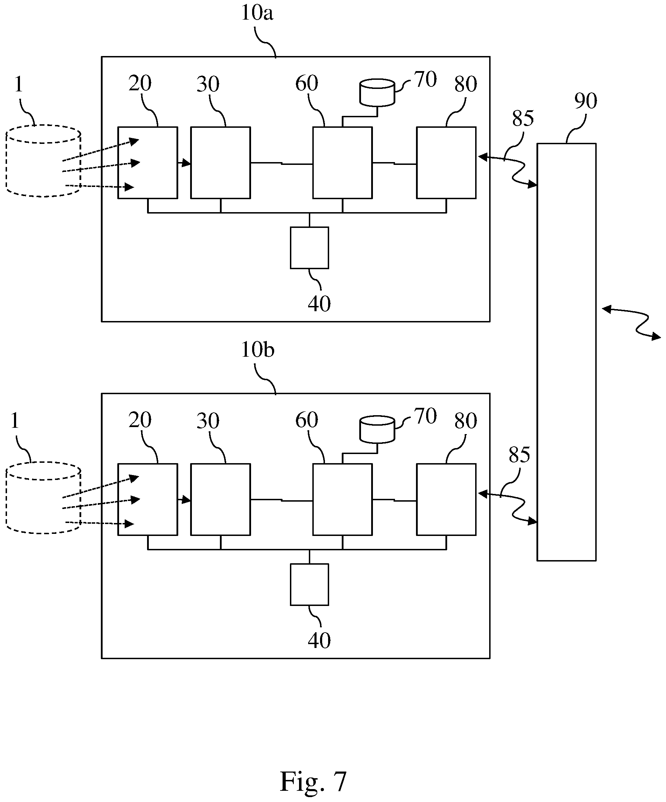

Fig.7 schematically shows an example of a system comprising two apparatus (10a, 10b) according to the invention. Each of the two apparatus is the same as the apparatus (10) described in relation to Fig. 6. The system further comprises an Edge unit (90) operationally connected to the data communication units (80) of the two apparatus (10a, 10b) and configured to further process the data received from one or both of the two apparatus (10a, 10b) and/or to further transmit the data received from one or both of the two apparatus (10a, 10b) to another more or less distant device. The Edge unit (90) may for example be arranged into the same room or building as the two apparatus (10a, 10b) and may comprise a network communication unit configured to further transmit data using Bluetooth, WIFI or mobile (cellular) communication protocols. Edge units or computers and their advantages are well known and will therefore not be described further.

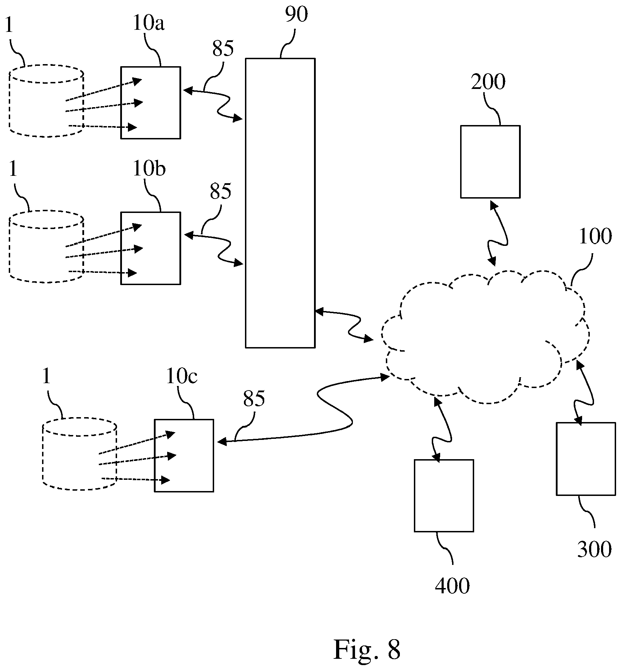

Fig.8 schematically shows another example of a system comprising one or more apparatus (10) according to the invention, in this example three apparatus (10a, 10b, 10c) . Those one or more apparatus are the same as described herein. A first apparatus (10a) and a second apparatus (10b) are connected to an Edge unit (90), as described in relation to Fig. 7. A third apparatus (10c) is also part of the system and is as described in relation to Fig. 6. The system also comprises a server (200) communicably connected to the Edge unit (90) and to the data communication unit (80) of the third apparatus (10c). The server (200) is configured to further process data received from the Edge unit (90) and from the data communication unit (80) of the third apparatus (10c). Data communication between the server (200) and the Edge unit (90) and the communication unit of the third apparatus (10c) may for example be established through a data communication network (100) such as a WAN or through the Internet for example.

In some examples, the server (200) comprises a second pre-trained Artificial Intelligence (AI) model and it uses this AI model to further analyze the data received by it from the apparatus (10a, 10b, 10c).

In some examples, the system also comprises a user device (300) configured to communicate over the data communication network (100) with the server (200) and/or with the Edge unit (90) and/or with the third apparatus (10c). The user device (300) is for example a mobile device such as a mobile phone or a personal computer of a person who is for example the owner or proxy of the water, gas or electricity meters (1) monitored by the one or more apparatus (10a, 10b, 10c) shown in Fig. 8. With such a system, raw or processed measurement data can be transmitted to such user.

In some examples, the system also comprises a third-party device (400) configured to communicate over the data communication network (100) with the server (200) and/or with the Edge unit (90) and/or with the third apparatus (10c). The third-party device (400) is for example a computer of a third-party which is interested into receiving the measurement data. The third-party may for example be a water, gas or electricity supplier.

In the examples described herein, the sensor unit (20) may be in the same housing as the other components of the apparatus (10), or it may alternatively be arranged in a separate housing with a wired connection to the data acquisition unit (30) or to the data processing unit (60). In the latter case, the wired connection comprises at least wires to supply electric power from the power supply (40) of the apparatus (10) to the first and second magnetic sensors (21, 22), as well as wires to transmit the signals provided by the sensor unit (20) to the data acquisition unit (30) or to the data processing unit (60).

The position and orientation of the first and second magnetic sensors (21, 22) with respect to the water, gas or electricity meter (1) to be monitored as shown in the present figures are only examples. Other positions and/or orientations may be used as well, as long as the front surface (51) of the sensor unit (20) is placed close to or against the meter (1) to be monitored and as long as the first sensing axis (X1) forms a first angle ($\alpha$) comprised between 1° and 179° with the second sensing axis (X2), preferably, an angle comprised between 30° and 60°, preferably an angle comprised between 40° and 50°, preferably an angle of 42°.

The present invention has been described in terms of specific embodiments, which are illustrative of the invention and not to be construed as limiting. More generally, it will be appreciated by persons skilled in the art that the present invention is not limited by what has been particularly shown and/or described hereinabove.

Reference numerals in the claims do not limit their protective scope.

Use of the verbs "to comprise", "to include", "to be composed of", or any other variant, as well as their respective conjugations, does not exclude the presence of elements other than those stated.

Use of the article "a", "an" or "the" preceding an element does not exclude the presence of a plurality of such elements.

The invention may also be described as follows: an apparatus (10) to measure the consumption of water, gas or electricity as registered respectively by an existing water, gas or electricity meter (1). The apparatus (10) comprises a first magnetic sensor (21) having a first sensing axis (X1) and a second magnetic sensor (22) having a second sensing axis (X2), wherein the first sensing axis (X1) forms an angle comprised between 1° and 179° with the second sensing axis (X2). The apparatus (10) comprises a data acquisition unit (30) operationally connected to the first and second magnetic sensors (21, 22) and configured to acquire data from the first and second magnetic sensors, and a power supply (40) for powering the apparatus (10).

**Claims**

1. An apparatus (10) to measure the consumption of water, gas or electricity as registered respectively by an existing water, gas or electricity meter (1), the apparatus (10) comprising a sensor unit (20) including a first magnetic sensor (21) having a first sensing axis (X1), a data acquisition unit (30) operationally connected to the sensor unit (20), and a power supply (40), **characterized in that** the apparatus (10) comprises a second magnetic sensor (22) having a second sensing axis (X2), **in that** the first sensing axis (X1) forms a first angle ($\alpha$) comprised between 1° and 179° with the second sensing axis (X2), and **in that** the data acquisition unit (30) is configured to acquire data from the first magnetic sensor (21) and from the second magnetic sensor (22).

2. An apparatus (10) according to claim 1, **characterized in that** the first angle ($\alpha$) is comprised between 30° and 60°.

3. An apparatus (10) according to claim 2, **characterized in that** the first angle ($\alpha$) is comprised between 40° and 50°.

4. An apparatus (10) according to claim 3, **characterized in that** the first angle ($\alpha$) is an angle of 42°.

5. An apparatus (10) according to any of preceding claims, **characterized in that** the first sensing axis (X1) and the second sensing axis (X2) are in a same plane.

6. An apparatus (10) according to any of preceding claims, **characterized in that** the sensor unit (20) comprises a structure (50) onto which the first magnetic sensor (21) and the second magnetic sensor (22) are mounted, the structure (50) presenting a front surface (51), preferably a plane front surface (51), **in that** the first sensing axis (X1) and a normal (N) to the front surface (51) form one half (α1) of the first angle (α), and **in that** the second sensing axis (X2) and the normal (N) to the front surface (51) form the other half (α2) of the first angle (α).

7. An apparatus (10) according to any of preceding claims, **characterized in that** the first magnetic sensor (21) and the second magnetic sensor (22) are spaced apart by a first distance (D1) comprised between 1 mm and 10 mm, preferably 4 mm

8. An apparatus (10) according to any of preceding claims, **characterized in that** the first magnetic sensor (21) is a 3D magnetic sensor and **in that** the second magnetic sensor (22) is a 3D magnetic sensor.

9. An apparatus (10) according to any of preceding claims, **characterized in that** the first magnetic sensor (21) and the second magnetic sensor (22) are Hall sensors.

10. An apparatus (10) according to any of preceding claims, **characterized in that** it further comprises a data processing unit (60) operationally connected to the data acquisition unit (30) and configured to process the data provided by the first and second magnetic sensors (21, 22).

11. An apparatus (10) according to claim 10, **characterized in that** the data processing unit (60) includes a first pre-trained AI model.

12. An apparatus (10) according to claim 10 or 11, **characterized in that** it further comprises a data communication unit (80) operationally connected to the data processing unit (60) and configured to transmit the data processed by the data processing unit (60).

13. A system comprising an apparatus (10) according to claim 12 and a server (200) communicably connected to the data communication unit (80) of the apparatus (10) and configured to process data received from the data communication unit (80).

14. A system according to claim 13, **characterized in that** the server (200) comprises a second pre-trained AI model.

Fig. 1

Fig. 2

Fig. 3

Fig. 4

Fig. 5

Fig. 6

Fig. 7

Fig. 8

## EUROPEAN SEARCH REPORT

**Application Number**

EP 23 21 3803

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 470 563 B1 (DEVERSE) 18 October 2016 (2016-10-18) * abstract; figures 6A-9 * * columns 1,7,9,12 * * columns 20-25 * | 1,5,7-14 | INV. G01D4/00 G01F15/06 |
| X | US 2018/375680 A1 (WRIGHT ET AL) 27 December 2018 (2018-12-27) * abstract; figures 3,7,8 * * paragraphs [0008], [0048], [0064], [0064], [0066] - [0069] * | 1-7, 9-11,13, 14 | |
| A | WO 2013/136295 A1 (NORTHSTAR TELEMETRICS S L) 19 September 2013 (2013-09-19) * pages 1,3 * | 11,14 | |

**TECHNICAL FIELDS SEARCHED (IPC)**

G01D
G01F

The present search report has been drawn up for all claims

| Place of search | Date of completion of the search | Examiner |
|---|---|---|
| Munich | 22 April 2024 | Barthélemy, Matthieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 563 946 A1**

## ANNEX TO THE EUROPEAN SEARCH REPORT
## ON EUROPEAN PATENT APPLICATION NO.

EP 23 21 3803

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2024

| Patent document cited in search report | | Publication date | Patent family member(s) | | Publication date |
|---|---|---|---|---|---|
| US 9470563 | B1 | 18-10-2016 | NONE | | |
| US 2018375680 | A1 | 27-12-2018 | CA | 3016226 A1 | 14-09-2017 |
| | | | EP | 3427012 A1 | 16-01-2019 |
| | | | US | 2018375680 A1 | 27-12-2018 |
| | | | WO | 2017152279 A1 | 14-09-2017 |
| WO 2013136295 | A1 | 19-09-2013 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020141228 A1

- US 2010289652 A1